# EUROPÄISCHE PATENTSCHRIFT

(11) **EP 2 744 034 B1**
(45) Veröffentlichungstag und Bekanntmachung des Hinweises auf die Patenterteilung: **18.02.2015**
(21) Anmeldenummer: 12196196.5
(22) Anmeldetag: 07.12.2012
(51) Int. Cl.: H01M 10/61, H01M 10/617, F28F 3/12, F28F 9/02, H01M 10/6556, H01M 10/6567, H01M 10/6566

(54) **Wärmetauscheranordnung**
Heat exchanger assembly
Agencement d'échangeur thermique

(43) Veröffentlichungstag der Anmeldung: 18.06.2014
(73) Patentinhaber: Obrist Powertrain GmbH, 6890 Lustenau (AT)
(72) Erfinder: Obrist, Frank, 6900 Bregenz (AT); Graz, Martin, 6890 Lustenau (AT); Gieze, Peter, 91074 Herzogenaurach (DE); Obrist, Oliver, 6850 Dornbirn (AT)
(74) Vertreter: Bohnenberger, Johannes

(56) Entgegenhaltungen:
- EP-A1- 0 014 249
- WO-A2-2012/130399
- DE-U1-202007 017 390
- GB-A- 873 769
- US-A- 5 205 348

## Beschreibung

Die Erfindung betrifft eine Wärmetauscheranordnung eines zu temperierenden technischen Objektes, insbesondere einer Batterie für einen elektrischen Fahrzeugantrieb, mit einem einen Zu- und Abströmkanal aufweisenden, von einem Wärmeträger durchströmten flachen Wärmetauscher, der sich in wärmeleitendem Kontakt mit Innenflächen des zu temperierenden Objektes befindet.

Durch die DE 10 2006 059 989 A1 ist eine Wärmetauscheranordnung bekannt, bei der sich eine aus Druckguss strukturiert geformte Kühlplatte in wärmeleitendem Kontakt mit einem schlangenförmig geformten Kühlrohr und mit von ihr abstehenden Wärmeleitelementen befindet, die sich in Mantelkontakt mit Rundzellen einer Batterie für einen elektrischen Fahrzeugantrieb befinden.

Durch die DE 10 2010 055 616 A1 ist eine weitere Wärmetauscheranordnung dieser Art bekannt, bei der eine durchströmte, Innenkanäle aufweisende, massive Kühlplatte mit mehreren massiven Rahmen verschraubt ist, die der Halterung von taschenförmigen Batteriezellen dienen.

Eine ähnliche Wärmetauscheranordnung ist aus WO 2012/130399 A2 bekannt.

Diese bekannten Wärmetauscheranordnungen veranschaulichen den relativ grossen konstruktiven Aufwand für die Herstellung von Kanälen für die Durchleitung eines Wärmeträgers durch einen flachgeformten Wärmetauscher und die Herstellung eines wärmeleitenden Kontaktes mit Innenflächen eines zu temperierenden Objektes. Ausserdem beansprucht ein solcher Wärmetauscher in einer betreffende Anordnung einen relativ grossen Raum, so dass er wesentlich zur Baugrösse der Anordnung beiträgt.

Der Erfindung liegt die Aufgabe zugrunde eine thermisch hochwirksame Wärmetauscheranordnung der genannten Art zu finden, die ein relativ geringes Bauvolumen beansprucht und die sich besonders einfach und als Massenprodukt kostengünstig herstellen und montieren lässt.

Die Lösung der Aufgabe erfolgt erfindungsgemäss dadurch, dass der Wärmetauscher als eine aus Folienmaterial gebildete Wärmeaustauschtasche ausgeführt ist und dass parallel zu dieser eine mit einem kompressiblen Medium gefüllte, aus einem Folienmaterial gebildete Drucktasche angeordnet ist.

Es versteht sich, dass sich eine derartige Wärmeaustauschtasche, im Vergleich zu den plattenförmigen, metallischen Gusskörpern des genannten Stands der Technik, auf einfache Weise durch Ausschneiden oder Ausstanzen von Folienstücken entsprechend ihrer angestrebten Form und Grösse, deren aufeinanderliegende Anordnung zueinander und Verschweissen oder Verkleben im Bereich ihrer Ränder herstellen lässt. Durch ihre schmiegsame Anlage an wärmeleitenden Innenflächen des zu temperierenden Objektes, unter dem von der Drucktasche ausgeübten Druck, stützt sie sich mit ihrem Innendruck an diesen Innenflächen ab und kann folglich einen hohen Druck und Geschwindigkeit eines durchströmenden Wärmeträgers aufnehmen und damit eine hohe Qualität einer erzwungenen konvektiven Wärmeübertragung gewährleisten.

Eine derartige Wärmeaustauschtasche ist aufgrund ihres im Verhältnis zur Grösse ihrer Wärmetauscherflächen geringen Material- und Raumbedarfs dazu geeignet, zusammen mit der zuvor noch ungefüllten Drucktasche in einem relativ engen Spaltraum eingebracht zu werden, so dass das zu temperierende technische Objekt sich mit entsprechend geringer Baugrösse herstellen lässt.

Nach Füllen der Drucktasche mit Luft oder Stickstoff und deren dichten Verschliessen legt sich die Wärmeaustauschtasche mit dem Fülldruck der Drucktasche an eine Innenfläche des zu temperierenden Objektes fest an, so dass eine gute Wärmeleitung an diese gewährleistet ist.

Für eine gleichmässige Verteilung des von der Drucktasche innerhalb des technischen Objektes wie z.B. innerhalb des Gehäuses einer Batterie ausgeübten Druckes ist in bevorzugter Ausführungsform der Erfindung zwischen der Drucktasche und der Wärmeaustauschtasche eine Druckverteilungsplatte angeordnet.

In weiterer vorteilhafter Ausführungsform der Erfindung ist für eine gleichmässige Strömungsverteilung zwischen den Folienwänden der Wärmeaustauschtasche ein Strömungsleitgitter eingeschlossen.

Weitere vorteilhafte Ausgestaltungen der Erfindung sind Gegenstand der abhängigen Patentansprüche und der folgenden Beschreibung anhand der Zeichnungen zu entnehmen. Es zeigt:
Fig. 1 eine perspektivische Darstellung einer Wärmeaustauschtasche der erfindungsgemässen Wärmetauscheranordnung, mit geschnittener Darstellung im Bereich eines Zuströmanschlusses und teilweise weggeschnittener dargestellter Taschenwand,
Fig. 2 eine vergrösserte, teilweise geschnittene Darstellung des Zuströmbereiches der Wärmeaustauschtasche nach Fig.1,
Fig. 3 eine Aufsicht auf einen Teil der Wärmeaustauschtasche nach Fig.1 ohne zweite Folienwand und Darstellung der Strömungsverteilung durch Pfeile,
Fig. 4 einen Teilquerschnitt durch einen eine erfindungsgemässe Wärmetauscheranordnung aufweisenden Batterie,
Fig. 5 eine perspektivische Darstellung von mehreren in einer Batterie miteinander verbundenen Wärmetauscheranordnungen,
Fig. 6 eine perspektivische Darstellung des Strömungsleitgitters einer weiteren Ausführungsform einer Wärmeaustauschtasche mit einstückig an ihm angeformten Anschlussstutzen,
Fig.7 einen Teilquerschnitt einer Wärmeaustauschtasche im Bereich eines ihrer Anschlussstutzen,
Fig. 8 eine vergrösserte perspektivische Teildarstellung des Strömungsleitgitters nach Fig.6, im Bereich eines Anschlusstutzens und
Fig.9 einen vergrösserten Teilschnitt in der Ebene der Wärmeaustauschtasche und im Bereich von Staudüsen.

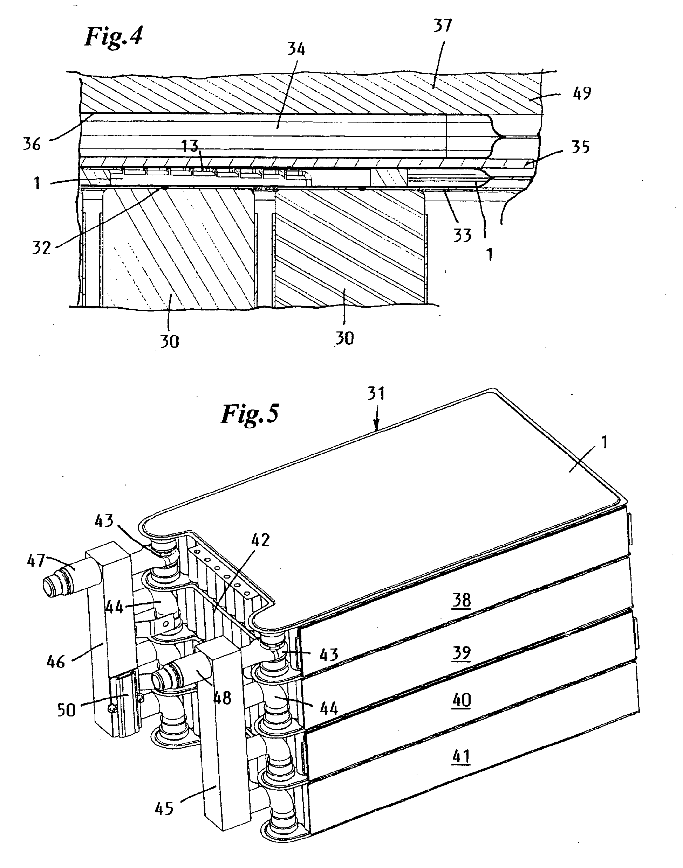

Die Wärmeaustauschtasche 1 der in Fig.4 dargestellten, erfindungsgemässen Wärmetauscheranordnung besteht aus zwei parallel zueinander verlaufenden, aus einem Folienmaterial gebildeten dünnen Wänden 2, 3, die im Bereich ihrer Ränder 4 dicht miteinander verbunden sind.

Ein geeignetes Folienmaterial für die Herstellung der Wärmeaustauschtasche 1 besteht zur Optimierung seiner Eigenschaften hinsichtlich Reissfestigkeit, Materialbeständigkeit, thermischer Leitfähigkeit, elektrischer Isolation und Schweissbarkeit aus einem Schichtverbund aus unterschiedlichen Materialien, wie z.B. Aluminium, Polyamid, Polypropylen und ist für verschiedene Zwecke im Handel mit einer Foliendicke von weniger als 0,2 mm erhältlich. Bei Anwendung für die Kühlung einer Batterie sollte zumindest eine der äusseren Schichten des Folienmaterials aus einem elektrisch isolierenden Kunststoffmaterial bestehen, um die Anordnung einer elektrisch isolierenden zusätzlichen Folie überflüssig zu machen

Die Wärmeaustauschtasche 1 hat beispielweise die Form eines Rechtecks mit abgerundeten Eckbereichen 5 und im Bereich von zwei schmalseitig einander gegenüberliegenden Eckbereichen angenähert halbkreisförmig abtehende Anschlussbereiche 6, 7 für die seitlich äussere Anordnung und Befestigung je eines vertikal zur Ebene der Wärmeaustauschtasche 1 gerichteten Anschlussstutzens 8, 9 für die Zu- und Ableitung und damit Zirkulation eines Wärmeträgers durch die Wärmeaustauschtasche 1.

Für die Aufnahme und Befestigung der Anschlussstutzen 8, 9 ist im Anschlussbereich 6,7 einer der Wände 2, 3 der Wärmeaustauschtasche 1 jeweils eine kreisrunde Öffnung 10 ausgestanzt. Der diese Öffnung 10 umgebende Wandbereich 11 liegt mit seiner Innenseite an einem Verbindungsflansch 12 des Anschlussstutzens 8, 9 an und ist mit diesem durch Schweissen oder Kleben fest und dicht verbunden.

Im Verhältnis zu dem eine ausreichende Durchströmung der Wärmeaustauschtasche 1 ermöglichenden, relativ geringen Abstand zwischen deren Wänden 2, 3 von vorzugsweise weniger als 2 mm, kann somit der durchströmte Innendurchmesser der Anschlussstutzen 8, 9 relativ gross ausgeführt werden, so dass eine entsprechend grosse Fördermenge des Wärmeträgers und folglich ein besonders wirksamer Wärmeaustausch mit geringen Temperaturunterschieden innerhalb der Wärmeaustauschtasche 1 realisierbar ist.

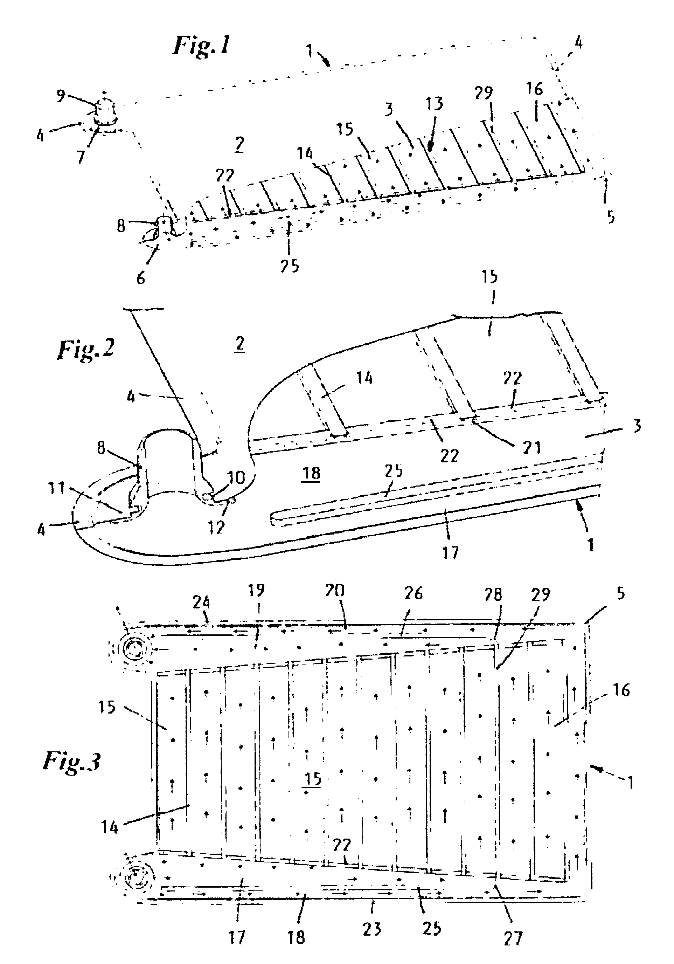

Für eine den Wärmeaustausch begünstigende Strömungsverteilung bei der Durchströmung der Wärmeaustauschtasche 1 von ihrem Zuströmstutzen 8 zu ihrem Abströmstutzen 9 ist zwischen den beiden Wänden 2, 3 der Wärmeaustauschtasche 1 ein Strömungsleitgitter 13 vorgesehen, das aus miteinander verbundenen Strömungsleitstegen besteht, die längs- und quergerichtete Strömungswege begrenzen, wie sie in Fig.3 durch Richtungspfeile angedeutet sind.

Beim dargestellten Ausführungsbeispiel begrenzt ein inneres Gitter von zahlreichen, zueinander parallelen Querstegen 14 Querkanäle 15, 16, die von mindestens einem, entlang der Längskanten der Wärmeaustauschtasche 1 geführten Zuströmkanal 17, 18 abzweigen und in mindestens einen entlang der gegenüberliegenden Längskante geführten Abströmkanal 19, 20 einmünden.

Ein die Querstege 14 an ihren Enden leiterförmig miteinander verbindender Längssteg 21 hat eine gegenüber diesen geringere Querschnittshöhe, so dass seine sich zwischen den Querstegen 14 erstreckenden Bereiche jeweils einen Stausteg 22 bilden. Folglich bewirken die Staustege 22 eine gleichmässigere Strömungsverteilung von dem Zuströmkanal 16 aus durch die Querkanäle 15 und 16 zu dem Abströmkanal 19, 20.

Weiterhin ist zur gleichmässigen Strömungsverteilung jeweils ein zumindest angenähert parallel zu den Längsrändern 23, 24 der Wärmeaustauschtasche 1 verlaufender, strömungsteilender Längssteg 25, 26 vorgesehen, der in deren abströmseitigen Bereich über eine Krümmung 27,28 in einen Trennsteg 29 übergeht. Durch diesen Trennsteg 29 werden zwei Gruppen von Querkanälen 15 einerseits und 16 anderseits voneinander abgrenzt.

Ein vorzugweise auf die beschriebene Weise gestaltetes Strömungsleitgitter 13 kann kostengünstig als Spritzgiessteil z.B. aus einer Aluminiumlegierung oder aus Kunststoff hergestellt werden und bei der Herstellung der Wärmeaustauschtasche 1 zwischen deren Folienwänden 2, 3 eingelegt werden, bevor diese entlang der Taschenränder 4 miteinander verschweisst werden. Das Strömungsleitgitter 13 bildet folglich mit seinen im Querschnitt gleichhohen Stegen 14, 25 -27 eine die Distanz von z.B. 2mm zwischen den Taschenwänden 2, 3 bestimmende, innere Abstützung. Eine solche Abstützung kann den Flächendruck aufnehmen, der für einen stabilen Zusammenhalt, z.B. der Bauelemente einer Batterie für einen Fahrzeugantrieb, erforderlichen ist.

Die Darstellung der Fig.4 zeigt ein Ausführungsbeispiel, das der Temperierung von zahlreichen, in gleicher Ebene parallel zueinander angeordneten, und parallel sowie in Reihe elektrisch miteinander verbundenen Stabzellen 30 einer Batterie 31 für einen Fahrzeugantrieb dient. Die Wärmeleitung von den Stabzellen 30 zur Wärmeaustauschtasche 1 erfolgt hierbei vorzugsweise über deren endseitigen elektrischen Kontakte 32, wofür sie durch eine gemeinsame Kontaktplatte 33 elektrisch parallel miteinander verbunden sind und die Wärmeaustauschtasche 1 an dieser Kontaktplatte 343wärmeleitend anliegt.

Für eine gleichmässige Anpressung der Wärmeaustauschtasche 1 an die Kontaktplatte 33 und damit guten wärmeleitenden Kontakt sowie gleichmässige Druckbelastung des in ihr eingeschlossenen Strömungsleitgitters 13 ist eine durch ein kompressibles Medium wie z.B. Luft oder Stickstoff gefüllte Drucktasche 34 vorgesehen und eine zwischen dieser und der Wärmeaustauschtasche 1 vorgesehene Druckverteilungsplatte 35 gewährleistet eine gleichmässige Druckübertragung auf die Stabzellen 30. Auf diese Weise ist für diese eine gute Temperierung und erschütterungsfeste Halterung gewährleistet. Dabei stützt sich die Drucktasche 34 mit ihrer der Wärmeaustauschtasche 1 abgekehrten Seite an der Innenfläche 36 einer Wand 37 eines nichtdargestellten, geschlossenen Batteriegehäuses ab.

Fig.5 zeigt ein Anwendungsbeispiel der Erfindung für die Temperierung von in mehreren übereinander angeordneten Schichten 38 - 41 kompakt gruppierten elektrischen Stabzellen 30, wobei zwischen jeder aneinander grenzenden Schicht und zusätzlich aussen an den äusseren Schichten 38, 41 jeweils eine Wärmeaustauschtasche 1 vorgesehen ist. Folglich erfolgt die Temperierung der Stabzellen 31 über eine wärmeleitende Verbindung mit deren beiden Kontaktenden.

Die an jeder der zueinander parallelen Wärmeaustauschtasche 1 vorgesehenen Anschlussstutzen 8, 9 sind gleichachsig übereinander im Bereich einer stirnseitigen Seitenfläche 42 der Batterie 31 vorgesehen und über eine T-förmige Abzweigungen 43 oder 90°-Krümmer 44 an einer parallel dazu verlaufenden, gemeinsamen Anschlussleitung 45, 46 angeschlossen. Diese Anschlussleitungen 45, 46 bilden über an ihnen vorgesehene Anschlussstutzen 47, 48 eine Verbindung zu einer nichtdargestellten Umwälzpumpe und zu einem äusseren, nicht dargestellten Wärmetauscher.

Bei elektrischer Belastung der z.B. Lithium-lonenzellen einschliessenden Batterie 31 dient der Wärmeträger der Ableitung der in den Batteriezellen 30 dabei entstehenden Wärme.

Eine für die Batteriezellen 30 und deren Leistungsfähigkeit z.B. im Winterbetrieb schädliche Abkühlung kann vorzugsweise in Kombination mit einer thermischen Isolierung 49 der Batterie durch einen an einer der Anschlussleitungen 45, 46 befestigten, z.B. über eine Thermostatschaltung elektrisch betriebenen Heizkörper 50 verhindert werden.

Bei einem zweiten Ausführungsbeispiel einer Wärmeaustauschtasche sind deren Folienwände 51, 52 einschliesslich ihrer Ränder auf einen auch als Strömungsleitgitter dienenden, inneren Tragrahmen 53 aufgeschweisst oder aufgeklebt, wofür dieser zusätzlich einen in seiner Grösse der Aussenkontur der Wärmeaustauschtasche entsprechenden Aussenrahmen 54 sowie Querströmungskanäle 55 begrenzende Querstege 56 aufweist, deren Querschnittshöhe derjenigen des Aussenrahmens 54 entspricht. Hingegen bilden die sich in Fortsetzung der Querstege 56 nach aussen, quer zu den Längskanälen 57, 58 erstreckenden Stege schwellenförmige Staustege 59.

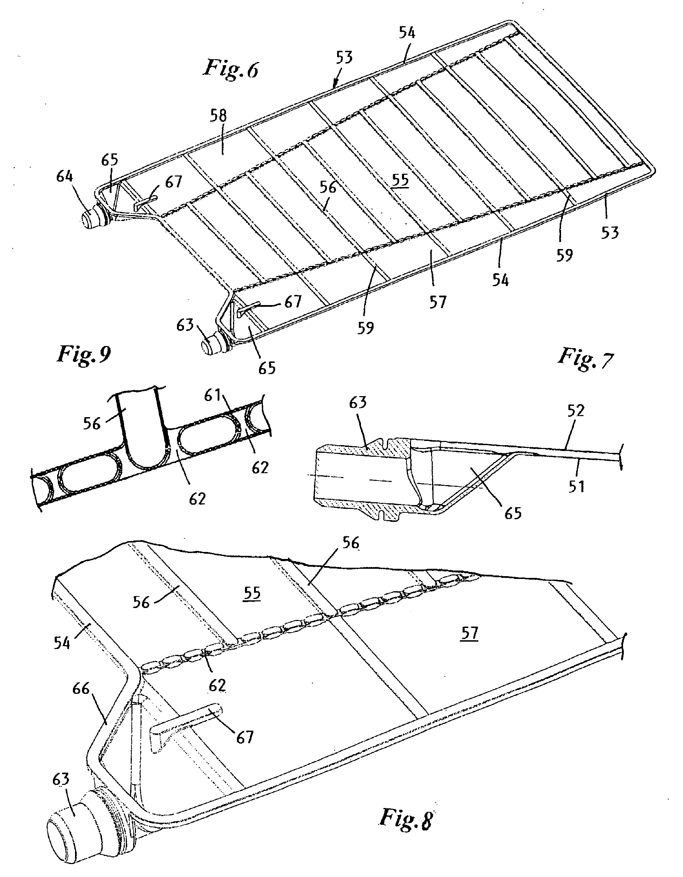

Um auch für die durch die Querströmungskanäle 55 verlaufende Querströmung durch Strömungsstau eine gleichmässige Durchströmung der Wärmeaustauschtasche zu erreichen, ist entsprechend den Darstellungen in Fig. 8 und Fig.9 zu- und abströmseitig jeweils eine Reihe von über einen Steg 60 miteinander verbundenen, abgerundeten Staukörpern 61 vorgesehen, so dass sie zwischen sich eine Reihe von Staudüsen 62 bilden. Die Höhe dieser Staudüsen 62 entspricht derjenigen der Querstege 56 und des Aussenrahmen 54. Folglich können die Folienwände 51, 52 zusätzlich auch mit diesen Reihen von Staukörpern 61 verschweisst oder verklebt sein.

Die Anschlussstutzen 63, 64 der Wärmeaustauschtasche können an den als Kunststoffspritzteil geformten Tragrahmen 53 einstückig angeformt sein. Hierfür ist zwischen dem ebenen Tragrahmen 53 und den zylindrischen Anschlussstutzen 63, 64 ein trogförmiges Kanalstück 65 ausgebildet, so dass sein Rand 66 in gleicher Ebene mit dem Aussenrahmen 54 in diesen übergeht.

Zur Versteifung des Übergangsbereiches zwischen den beiden trogförmigen Kanalstücken 65 und den beiden Anschlussstutzen 63, 64 kann an diesem eine sich in Strömungsrichtung erstreckende und somit auch die Strömung leitende Rippe 67 angeformt sein.

## Patentansprüche

1. Wärmetauscheranordnung eines zu temperierenden technischen Objektes, insbesondere einer Batterie für einen elektrischen Fahrzeugantrieb, mit einem einen Zu- und Abströmkanal (6, 7) aufweisenden, von einem Wärmeträger durchströmten flachen Wärmetauscher (1), der sich in wärmeleitendem Kontakt mit Innenflächen des zu temperierenden Objektes befindet, **dadurch gekennzeichnet, dass** der Wärmetauscher als eine aus einem Folienmaterial gebildete Wärmeaustauschtasche (1) ausgeführt ist und dass parallel zu dieser eine mit einem kompressiblen Medium gefüllte, aus einem Folienmaterial gebildete Drucktasche (34) angeordnet ist, wobei Folienwände (51,52) der Wärmeaustauschtasche auf einen ein Strömungsleitgitter bildenden Tragrahmen (53) aufgeschweißt oder aufgeklebt sind, der einen in seiner Größe der Aussenkontur der Wärmeaustauschtasche entsprechenden Aussenrahmen (54) aufweist, und wobei Anschlussstutzen (63, 64) der Wärmeaustauschtasche einstückig an den Tragrahmen (53) angeformt sind.

2. Wärmetauscheranordnung nach Anspruch 1, **dadurch gekennzeichnet, dass** zwischen der Wärmeaustauschtasche (1) und der Drucktasche (34) eine Druckverteilungplatte (35) angeordnet ist.

3. Wärmetauscheranordnung nach Anspruch 1 oder 2, **dadurch gekennzeichnet, dass** in der Wärmeaustauschtasche (1) ein Strömungsleitgitter (13) eingeschlossen ist.

4. Wärmetauscheranordnung nach Anspruch 3, **dadurch gekennzeichnet, dass** jeweils ein zumindest angenähert parallel zu den Längsrändern (23, 24) der Wärmeaustauschtasche (1) verlaufender, strömungsteilender Längssteg (25, 26) vorgesehen ist, so dass die Zuströmung in die Wärmeaustauschtasche (1) und die Abströmung in Form von zwei parallel zueinander verlaufenden Wärmeträgerströmen erfolgt, wobei die zu- und abströmseitigen Längsstege (25, 26) über einen Trennsteg (29) miteinander verbunden sind und dieser Trennsteg (29) zwei Gruppen von Querkanälen (15,16) der Wärmeaustauschtasche (1) begrenzt.

5. Wärmetauscheranordnung nach Anspruch 3 oder 4, **dadurch gekennzeichnet, dass** ein die Querstege (14) an ihren Enden leiterförmig miteinander verbindender Längssteg (21) eine gegenüber diesen geringere Querschnittshöhe hat, so dass seine sich zwischen den Querstegen (14) erstreckenden Bereiche jeweils einen Stausteg (22) bilden.

6. Wärmetauscheranordnung nach einem der Ansprüche 1 bis 5, **dadurch gekennzeichnet, dass** für die Zu- und Abströmung in einer der Wände (2, 3) der Wärmeaustauschtasche (1) mit Abstand voneinander jeweils eine kreisrunde Öffnung (10) vorgesehen ist, in denen ein Anschlussstutzen (8, 9) dicht eingesetzt ist, so dass die Anschlusstutzen (8, 9) senkrecht zur Ebene der Wärmeaustauschtasche (1) gerichtet sind.

7. Wärmetauscheranordnung nach Anspruch 6, **dadurch gekennzeichnet, dass** zwischen der betreffenden Taschenwand (3) und dem Umfang eines Anschlussstutzens (7,8) eine dichte Verbindung durch Kleben oder Schweissen über einen an diesem angeformten, tellerrandförmig oder flanschförmig abstehenden Stutzenrand (12) erfolgt.

8. Wärmetauscheranordnung nach einem der Ansprüche 1 bis 7, **dadurch gekennzeichnet, dass** zwischen dem Tragrahmen (53) und den Anschlussstutzen (63, 64) der Wärmeaustauschtasche ein trogförmiges Kanalstück (65) vorgesehen ist, dessen Rand (66) in gleicher Ebene mit dem Aussenrahmen (54) verläuft.

9. Wärmetauscheranordnung nach einem der Ansprüche 1 bis 8, **dadurch gekennzeichnet, dass** zu und/oder abströmseitig zu Querkanälen (55) der Wärmeaustauschtasche eine Reihe von Staukörpern (61) vorgesehen ist.

10. Wärmetauscheranordnung nach einem der Ansprüche 1 bis 9, **dadurch gekennzeichnet, dass** der Abstand zwischen den Folienwänden (2, 3) der Wärmeaustauschtasche (1) weniger als 2 mm beträgt.

11. Wärmetauscheranordnung nach einem der Ansprüche 1 bis 10, **dadurch gekennzeichnet, dass** die Folienwände (2,3) der Wärmeaustauschtasche (1) weniger als 0,2 mm dick sind.

12. Stabzellen (30) aufweisende Batterie (31) für einen elektrischen Fahrzeugantrieb mit einer Wärmetauscheranordnung nach einem der Ansprüche 1 bis 11, **dadurch gekennzeichnet, dass** endseitige Kontakte (32) der Batterie (31) jeweils durch eine gemeinsame Kontaktplatte (34) elektrisch parallel und in Serie miteinander verbunden sind, wobei an mehreren solcher Kontaktplatten (33) eine Wärmeaustauschtasche (1) wärmeleitend anliegt und zumindest ihre den Kontaktplatten (33) zugekehrte Wand (3) aus einem mehrschichtigen Folienmaterial besteht, das auf der an der Kontaktplatte (33) anliegenden Seite eine elektrisch isolierende Schicht aufweist.

13. Batterie (31) nach Anspruch 12, **dadurch gekennzeichnet, dass** die elektrisch miteinander verbundenen Stabzellen (30) parallel zueinander und in mehreren übereinander angeordneten Schichten (38 - 41) gruppiert sind, wobei zwischen jeder der aneinander grenzenden Schichten (38 - 41) und zusätzlich aussen an den äusseren Schichten (38, 41) jeweils eine Wärmeaustauschtasche (1) vorgesehen ist.

14. Batterie (31) nach Anspruch 12 oder 13, **dadurch gekennzeichnet, dass** die an jeder der zueinander parallelen Wärmeaustauschtaschen (1) vorgesehenen Anschlussstutzen (8, 9) gleichachsig übereinander, im Bereich einer stirnseitigen Seitenfläche (42) der Batterie (32) angeordnet und über eine T-förmige Abzweigungen (43) oder 90°-Krümmer (44) an einer parallel dazu verlaufenden, gemeinsamen Anschlussleitung (45, 46) angeschlossen sind.

## Claims

1. A heat exchanger arrangement of a technical object whose temperature is to be controlled, in particular of a battery for an electric vehicle drive, having a flat heat exchanger (1) which has an inflow and outflow duct (6, 7) through which a heat carrier medium flows, which heat exchanger (1) is in heat-conducting contact with internal surfaces of the object whose temperature is to be controlled, **characterized in that** the heat exchanger is implemented as a heat exchange pocket (1) formed from a foil material and that parallel thereto, there is arranged a pressure pocket (34) which is filled with a compressible medium and which is formed from a foil material, wherein foil walls (51, 52) of the heat exchange pocket are welded or adhesively bonded to a supporting frame (53) which forms a flow guide baffle, which supporting frame (53) has an outer frame (54) corresponding in size to the outer contour of the heat exchange pocket, and wherein connection nozzles (63, 64) of the heat exchange pocket are formed integrally on the supporting frame (53).

2. The heat exchanger arrangement according to claim 1, **characterized in that** a pressure distribution plate (35) is arranged between the heat exchange pocket (1) and the pressure pocket (34).

3. The heat exchanger arrangement according to claim 1 or claim 2, **characterized in that** a flow guide baffle (13) is enclosed in the heat exchange pocket (1).

4. The heat exchanger arrangement according to claim 3, **characterized in that** in each case one flow-dividing longitudinal web (25, 26) is provided which runs at least approximately parallel to the longitudinal edges (23, 24) of the heat exchange pocket (1), such that the inflow into the heat exchange pocket (1) and the outflow take place in the form of two heat carrier medium flows running parallel to one another, wherein the inflow-side and outflow-side longitudinal webs (25, 26) are connected to one another via a dividing web (29), and said dividing web (29) delimits two groups of transverse ducts (15, 16) of the heat exchange pocket (1).

5. The heat exchanger arrangement according to claim 3 or claim 4, **characterized in that** a longitudinal web (21) which connects the transverse webs (14) to one another at their ends in ladder-shaped form has a smaller cross-sectional height with respect to said transverse webs (14), such that those regions of the longitudinal web (21) which extend between the transverse webs (14) form in each case one dam web (22).

6. The heat exchanger arrangement according to any one of claims 1 to 5, **characterized in that**, for the inflow and outflow, in each case one circular opening (10) is provided in one of the walls (2, 3) of the heat exchange pocket (1), said openings being spaced apart from one another, and into which openings a connection nozzle (8, 9) is sealingly inserted such that the connection nozzles (8, 9) are oriented perpendicular to the plane of the heat exchange pocket (1).

7. The heat exchanger arrangement according to claim 6, **characterized in that** between the respective pocket wall (3) and the circumference of a connection nozzle (7, 8) a sealed connection is implemented by means of adhesive bonding or welding via a nozzle edge (12) which is integrally formed on said connection nozzle (7, 8) and which projects in the manner of a plate edge or in the manner of a flange.

8. The heat exchanger arrangement according to any one of claims 1 to 7, **characterized in that** a trough-shaped duct piece (65) is provided between the supporting frame (53) and the connection nozzle (63, 64) of the heat exchange pocket, the edge (66) of which duct piece (65) runs in the same plane as the outer frame (54).

9. The heat exchanger arrangement according to any one of claims 1 to 8, **characterized in that** a member of dam bodies (61) is provided upstream and/or downstream of transverse ducts (55) of the heat exchange pocket.

10. The heat exchanger arrangement according to any one of claims 1 to 9, **characterized in that** the spacing between the film walls (2, 3) of the heat exchange pocket (1) is less than 2 mm.

11. The heat exchanger arrangement according to any one of claims 1 to 10, **characterized in that** the film walls (2, 3) of the heat exchange pocket (1) are less than 0.2 mm thick.

12. A battery (31), which has bar cells (30), for an electric vehicle drive, having a heat exchanger arrangement according to any one of claims 1 to 11, **characterized in that** end-side contacts (32) of the battery (31) are in each case connected electrically in parallel and in series with one another by means of a common contact plate (34), wherein a heat exchange pocket (1) rests in a heat-conducting manner against a plurality of such contact plates (33), and at least that wall (3) of said heat exchange pocket which faces toward the contact plates (33) is composed of a multi-layer film material which, on the side resting against the contact plate (33), has an electrically insulating layer.

13. The battery (31) according to claim 12, **characterized in that** the electrically interconnected bar cells (30) are grouped in parallel with one another and in a plurality of layers (38 - 41) arranged one above the other, wherein in each case one heat exchange pocket (1) is provided between each of the adjoining layers (38 - 41) and additionally on the outside on the outer layers (38, 41).

14. The battery (31) according to claim 12 or claim 13, **characterized in that** the connection nozzles (8, 9) provided at each of the mutually parallel heat exchange pockets (1) are arranged coaxially above one another in the region of an end-face side face (42) of the battery (32) and are connected via T-shaped branches (43) or 90° elbows (44) to a common connection line (45, 46) running parallel thereto.

## Revendications

1. Agencement d'échangeur de chaleur d'un objet technique à tempérer, en particulier d'une batterie pour un système de propulsion de véhicule électrique, avec un échangeur de chaleur (1) plat traversé par un caloporteur, comportant un conduit d'arrivée et d'écoulement (6, 7) qui se trouve en contact thermoconducteur avec les surfaces internes de l'objet à tempérer **caractérisé en ce que** l'échangeur de chaleur est configuré comme une poche d'échange de chaleur (1) formée à partir d'un matériau en feuille et **en ce que** parallèlement à celle-ci est disposée une poche sous pression (34) formée d'un matériau en feuille, remplie d'un milieu copmpressible, les parois de feuille (51, 52) de la poche d'échange de chaleur étant soudées ou collées sur un cadre porteur (53) formant un réseau de guidage d'écoulement qui comporte un cadre extérieur (54) correspondant dans sa taille au profil extérieur de la poche d'échange de chaleur et des embouts de raccord (63, 64) de la poche d'échange de chaleur étant formés en une seule pièce au cadre porteur (53).

2. Agencement d'échangeur de chaleur selon la revendication 1 **caractérisé en ce qu'**une plaque de distribution de répartition de pression (35) est disposée entre la poche d'échange de chaleur (1) et la poche sous pression (34).

3. Agencement d'échangeur de chaleur selon la revendication 1 ou 2 **caractérisé en ce qu'** un réseau de guidage d'écoulement (13) est englobé dans la poche d'échange de chaleur (1).

4. Agencement d'échangeur de chaleur selon la revendication 3 **caractérisé en ce qu'** à chaque fois est prévu une nervure longitudinale (25, 26) divisant l'écoulement, passant au moins presque parallèlement aux bords longitudinaux (23, 24) de la poche d'échange de chaleur (1) de sorte que l'afflux dans la poche d'échange de chaleur (1) et l'écoulement ont lieu sous la forme de deux flux de caloporteur passant parallèlement l'un par rapport à l'autre, les nervures longitudinales du côté afflux et du côté écoulement (25, 26) étant reliées entre elles par une nervure de séparation (29)et cette nervure de séparation (29) délimite deux groupes de canaux transversaux (15, 16) de la poche d'échange de chaleur (1).

5. Agencement d'échangeur de chaleur selon la revendication 3 ou 4 **caractérisé en ce qu'**une nervure longitudinale (21) reliant entre elles à leurs extrémités en forme d'échelle les nervures transversales (14) possède une hauteur de section plus faible par rapport à celles-ci de sorte que ses zones s'étendant entre les nervures transversales (14) forment respectivement une nervure de retenue (22).

6. Agencement d'échangeur de chaleur selon l'une quelconque des revendications 1 à 5 **caractérisé en ce que** pour l'afflux et l'écoulement une ouverture (10) circulaire est respectivement prévue dans une des parois (2,3) de la poche d'échange de chaleur (1) avec un espace entre elles dans laquelle est inséré de façon hermétique un embout de raccord (8, 9) de sorte que les embouts de raccords (8, 9) sont orientés perpendiculairement au plan de la poche d'échange de chaleur (1).

7. Agencement d'échangeur de chaleur selon la revendication 6 **caractérisé en ce qu'**entre la paroi de poche (3) concernée et la périphérie d'un embout de raccord (8, 9), une liaison hermétique est établie par collage ou soudage par un bord de tubulure (12) s'éloignant en forme de bordure de couronne ou en forme de bride, formé sur celui-ci.

8. Agencement d'échangeur de chaleur selon l'une quelconque des revendications 1 à 7 **caractérisé en ce qu'**entre le cadre porteur (53) et les embouts de raccord (63, 64) de la poche d'échange de chaleur est prévue une pièce de canal (65) en forme d'auge dont le bord (66) passe dans le même plan que le cadre extérieur (54).

9. Agencement d'échangeur de chaleur selon l'une quelconque des revendications 1 à 8 **caractérisé en ce qu'**une série de corps de retenue (61) est prévue du côté afflux et/ou écoulement par rapport aux canaux transversaux (55) de la poche d'échange de chaleur.

10. Agencement d'échangeur de chaleur selon l'une quelconque des revendications 1 à 9 **caractérisé en ce que** l'espace entre les parois de feuille (2, 3) de la poche d'échange de chaleur (1) est inférieur à 2 mm.

11. Agencement d'échangeur de chaleur selon l'une quelconque des revendications 1 à 10 **caractérisé en ce que** les parois de feuille (2, 3) de la poche d'échange de chaleur (1) ont une épaisseur inférieure à 0,2 mm.

12. Batterie (31) comportant des éléments en barres (30) pour un système de propulsion de véhicule électrique avec un agencement d'échangeur de chaleur selon l'une quelconque des revendications 1 à 11 **caractérisée en ce que** les contacts (32) extrêmes de la batterie (31) sont électriquement reliés à chaque fois entre eux parallèlement et en série par une plaque de contact (34) commune, une poche d'échange de chaleur (1) étant placée de façon thermoconductrice sur plusieurs plaques de contact (33) de ce type et au moins leur paroi (3) orientée vers les plaques de contact (33) étant en un matériau en feuille multicouches qui comporte une couche électriquement isolante sur le côté adjacent à la plaque de contact (33).

13. Batterie (31) selon la revendication 12 **caractérisée en ce que** les éléments en barres (30) reliés électriquement entre eux sont groupés parallèlement l'un par rapport à l'autre et en plusieurs couches disposées l'une sur l'autre (38-41), une poche d'échange de chaleur (1) étant à chaque fois prévue entre chacune des couches voisines l'une de l'autre (38-41) et en plus à l'extérieur sur les couches externes (38-41).

14. Batterie (31) selon la revendication 12 ou 13 **caractérisée en ce que** les embouts de raccords (8, 9) prévus sur chacune des poches d'échange de chaleur (1) parallèles l'une par rapport à l'autre sont disposés dans le même axe l'une au-dessus de l'autre dans la zone d'une surface latérale (42) frontale de la batterie (32) et sont raccordés par des ramifications (43) en forme de T ou un coude à 90° (44) à un conduit de raccordement (45, 46) commun, passant parallèlement à ceux-ci.
